# EUROPÄISCHE PATENTSCHRIFT

(11) **EP 4 068 330 B1**
(45) Veröffentlichungstag und Bekanntmachung des Hinweises auf die Patenterteilung: **08.01.2025**
(21) Anmeldenummer: 21166260.6
(22) Anmeldetag: 31.03.2021
(51) Int. Cl.: H01H 85/46

(54) **VORRICHTUNG ZUR KOMPENSATION VON WIDERSTANDSTOLERANZEN EINER SICHERUNG FÜR EINEN STROMKREIS UND LEITUNGSTREIBER FÜR EINEN ANSCHLUSS EINES KOMMUNIKATIONSGERÄTS**
DEVICE FOR COMPENSATING FOR RESISTANCE TOLERANCES OF A FUSE FOR A CIRCUIT AND LINE DRIVER FOR A CONNECTION OF A COMMUNICATION DEVICE
DISPOSITIF DE COMPENSATION DES TOLÉRANCES DE RÉSISTANCE D'UN FUSIBLE POUR UN CIRCUIT ÉLECTRIQUE ET PILOTE POUR UNE CONNEXION D'UN APPAREIL DE COMMUNICATION

(43) Veröffentlichungstag der Anmeldung: 05.10.2022
(73) Patentinhaber: Siemens Aktiengesellschaft, 80333 München (DE)
(72) Erfinder: Bachmann, Reinhard, 67360 Lingenfeld (DE); Geppert, Michael, 77833 Ottersweier (DE); Gottron, Jens, 76137 Karlsruhe (DE); Klamm, Arnold, 76870 Kandel (DE)
(74) Vertreter: Siemens Patent Attorneys

(56) Entgegenhaltungen:
- JP-Y1- S4 019 816
- US-A1- 2018 096 807

## Beschreibung

Die vorliegende Erfindung betrifft einen Leitungstreiber für einen Anschluss eines Kommunikationsgeräts, insbesondere eines Kommunikationsgeräts für ein 2-Draht-Ethernet-Bussystem innerhalb eines industriellen Automatisierungssystems, wobei der Leitungstreiber eine Vorrichtung zur Kompensation von Widerstandstoleranzen einer Sicherung für einen Stromkreis umfasst. Der Leitungstreiber kann in das Kommunikationsgerät integriert sein oder als externe Komponenten für ein Kommunikationsgerät ohne integrierten Leitungstreiber ausgestaltet sein.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit gro-ßem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Ethernet Advanced Physical Layer (Ethernet APL) stellt eine OSI Layer 1 Erweiterung dar, die speziell Anforderungen in der Prozessindustrie Rechnung trägt. Dabei steht insbesondere eine Kommunikation mit hoher Geschwindigkeit über große Entfernungen sowie 2-adrige Kabel und Schutzmaßnahmen für einen sicheren Betrieb innerhalb explosionsgefährdeter Bereiche im Vordergrund. Als Barriere zur Realisierung von Eigensicherheit ist jeweils eine elektronische Schaltung an Ausgängen bzw. Eingängen von Switchen und Feldgeräten vorgesehen. Derartige Schaltungen verhindern, dass zündfähige elektrische Energie in Anschlüsse gelangt. Insbesondere müssen Geräte, die in explosionsgefährdeten Bereichen betrieben werden, durch eine Schutzart gemäß Normenreihe IEC60079 geschützt werden. Hierdurch wird sichergestellt, dass eine explosive Umgebung selbst in einem mehrfachen Fehlerfall nicht durch heiße Oberflächen oder Funkenerzeugung entzündet werden kann. Dies erfolgt durch eine sichere Begrenzung von Spannungen und Strömen in eigensicher ausgestalteten Schaltkreisen.

Aus US 2018/096807 A1 ist eine Vorrichtung mit einer toleranzbehafteten Sicherung, einem in Reihe zur Sicherung geschalteten ersten Widerstand, einem parallel zur Sicherung und zum ersten Widerstand geschalteten zweiten Widerstand bekannt. Dabei weist die Vorrichtung bei einer vorgegebenen Umgebungstemperatur einen Widerstand auf, der einem gewünschten Gesamtwiderstand entspricht. Außerdem beträgt der zweite Widerstand ein Vielfaches des ersten Widerstands.

Zur Strom- bzw. Leistungsbegrenzung werden vielfach Schmelzsicherungen genutzt, insbesondere wenn zu begrenzende Ströme zu hohen Verlusten führen oder nur niederohmige Widerstände verwendet werden sollen. Im Vergleich zu Widerständen weisen Sicherungen jedoch hohe Kaltwiderstandstoleranzen und hohe Temperaturkoeffizienten auf. Speziell wenn Signalleitungen mit definierten Abschlusswiderständen durch Sicherungen geschützt werden sollen, ist problematisch, dass die Abschlusswiderstände sowohl von einer jeweiligen Charge der Sicherungen als auch von Umgebungstemperaturen stark abhängig sind. Zur Vermeidung von Fehlanpassungen in Signalübertragungssystemen darf ein jeweiliger Gesamtwiderstand vorgegebene Toleranzen nicht überschreiten, da ansonsten mitunter keine Kommunikation möglich ist bzw. Bedingungen für Konformitätsprüfungen nicht erfüllt werden.

Der vorliegenden Erfindung liegt daher die Aufgabe zugrunde, einen Leitungstreiber für einen Anschluss eines Kommunikationsgeräts anzugeben, der eine Sicherung umfasst und trotz Kaltwiderstandstoleranzen und Temperaturkoeffizienten der Sicherung zur zuverlässigen Leistungsanpassung bzw. Strombegrenzung insbesondere in explosionsgefährdeten Umgebungen geeignet ist.

Diese Aufgabe wird erfindungsgemäß durch einen Leitungstreiber mit den in Anspruch 1 angegebenen Merkmalen gelöst.

Der erfindungsgemäße Leitungstreiber ist für einen Anschluss eines Kommunikationsgeräts, das eine PHY-Schnittstellenvorrichtung umfasst, an ein 2-Draht-Ethernet-Bussystem geeignet und umfasst eine Vorrichtung zur Kompensation von Widerstandstoleranzen einer toleranzbehafteten Sicherung für einen Stromkreis. Dabei weist der Leitungstreiber einen Brückengleichrichter auf, der zwei busseitige Anschlüsse und zwei geräteseitige Anschlüsse umfasst. Außerdem umfasst der Leitungstreiber eine mit einer ersten Sendeeinheit der PHY-Schnittstellenvorrichtung des Kommunikationsgeräts verbindbare erste Hochpassfilteranordnung und eine mit einer zweiten Sendeeinheit der PHY-Schnittstellenvorrichtung des Kommunikationsgeräts verbindbare zweite Hochpassfilteranordnung. Dabei umfassen die erste Hochpassfilteranordnung und die zweite Hochpassfilteranordnung jeweils eine Vorrichtung entsprechend vorangehenden Ausführungen. Der Leitungstreiber kann insbesondere als in ein Kommunikationsgerät integrierter Leitungstreiber ausgestaltet sein. Alternativ dazu ist auch eine Ausführung als externes Gerät möglich.

Die vom erfindungsgemäßen Leitungstreiber umfasste Vorrichtung zur Kompensation der Widerstandstoleranzen der toleranzbehafteten Sicherung umfasst die toleranzbehaftete Sicherung und einen in Reihe zur Sicherung geschalteten ersten Widerstand. Parallel zur Sicherung und zum ersten Widerstand ist ein zweiter Widerstand geschaltet.

Erfindungsgemäß weist die Vorrichtung bei einer vorgegebenen Umgebungstemperatur einen Widerstand auf, der einem gewünschten Gesamtwiderstand entspricht. Dabei wird der zweite Widerstand in Abhängigkeit von einer in einem Fehlerzustand in die Vorrichtung eingetragenen Leistung bzw. in Abhängigkeit einer vorgegebenen Toleranz des Widerstands der Vorrichtung ausgewählt und beträgt ein Vielfaches des ersten Widerstands. Insbesondere können auf diese Weise hohe Widerstandstoleranzen der Sicherung durch eine entsprechend hochohmige Auslegung des zweiten Widerstands im Vergleich zum ersten Widerstand kompensiert werden. Andererseits kann ein in explosionsgefährdeten Umgebungen gewünschter niedriger Leistungseintrag in die Vorrichtung im Fehlerfall realisiert werden, wenn der erste Widerstand und der zweite Widerstand eine ähnliche Größenordnung aufweisen. Generell führt eine Eröffnung eines Parallelzweigs mittels des zweiten Widerstands zu einer deutlichen Toleranzreduktion des Gesamtwiderstands.

Die Sicherung kann bei der vorgegebenen Umgebungstemperatur eine Toleranz hinsichtlich ihres Widerstands von zumindest 5 % aufweisen. Die vorgegebene Umgebungstemperatur beträgt vorzugsweise 25° C. Insbesondere kann die Sicherung innerhalb eines vorgegebenen Temperaturbereichs eine Toleranz hinsichtlich ihres Widerstands von zumindest 20 % aufweisen. Der vorgegebene Temperaturbereich umfasst beispielsweise zumindest einen Bereich zwischen -40° C und 80° C. In oben genannten Fällen ist die Eröffnung des Parallelzweigs mit dem zweiten Widerstand besonders effizient zur Kompensation der Widerstandstoleranzen der Sicherung, insbesondere im Vergleich zur Auswahl einer Sicherung mit relativ niedrigen Widerstandstoleranzen zu erhöhten Kosten. Dies gilt insbesondere auch, wenn die Sicherung innerhalb des vorgegebenen Temperaturbereichs einen Temperaturkoeffizienten von 0,4 % pro Grad Kelvin oder höher aufweist.

Als besonders vorteilhaft zur Kompensation der Widerstandstoleranzen der Sicherung erweist sich die Eröffnung des Parallelzweigs mit dem zweiten Widerstand ferner, wenn der erste Widerstand bzw. der zweite Widerstand innerhalb des vorgegebenen Temperaturbereichs eine Toleranz hinsichtlich ihres jeweiligen bzw. seines Widerstands von maximal 0,1 % aufweisen bzw. aufweist. In diesem Fall können auch höhere Widerstandstoleranzen der Sicherung im Bereich über 5 % bei der vorgegebenen Umgebungstemperatur zufriedenstellend ausgeglichen werden.

Entsprechend einer bevorzugten Ausgestaltung der vorliegenden Erfindung ist der zweite Widerstand in Abhängigkeit von einer in die Vorrichtung eingetragenen Leistung bei einem Schmelzen der Sicherung vorgegeben. Damit ist die Vorrichtung zur Verwendung in explosionsgefährdeten Umgebungen besonders geeignet. Darüber hinaus können hohe Widerstandstoleranzen der Sicherung sehr wirksam kompensiert werden, wenn der zweite Widerstand in Relation zum ersten Widerstand zumindest einen zehnfachen Widerstandswert aufweist.

Die vorliegende Erfindung wird nachfolgend an einem Ausführungsbeispiel anhand der Zeichnung näher erläutert. Es zeigt
- Figur 1: ein Widerstandsnetzwerk zur Vorrichtung zur Kompensation von Widerstandstoleranzen einer Sicherung für einen Stromkreis,
- Figur 2: ein auf hohe Datenübertragungsraten bei gleichzeitig hoher Versorgungsleistung ausgelegtes Kommunikationsgerät für ein 2-Draht-Ethernet-Bussystem.

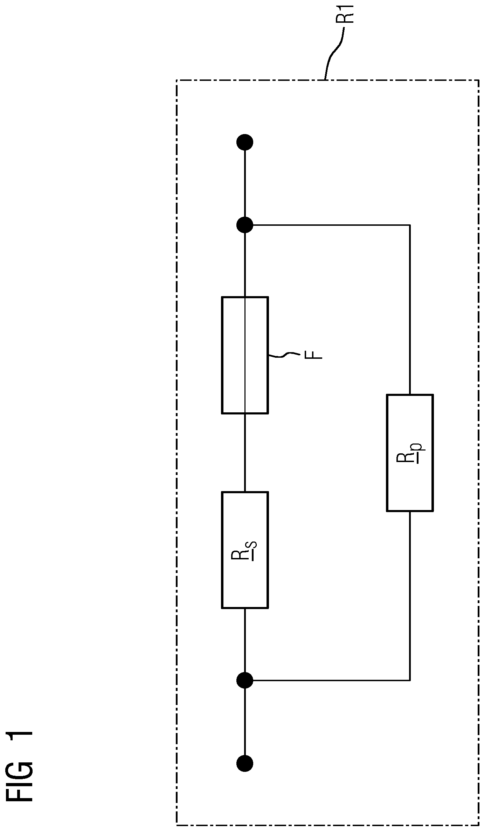

Das in Figur 1 dargestellte Widerstandsnetzwerk R1 zur Kompensation von Widerstandstoleranzen umfasst außer einer toleranzbehafteten Sicherung F, einen in Reihe zur Sicherung geschalteten ersten Widerstand R_{S} sowie einen parallel zur Sicherung F und zum ersten Widerstand R_{S} geschalteten zweiten Widerstand R_{P}. Das Widerstandsnetzwerk R1 weist bei einer vorgegebenen Umgebungstemperatur, beispielsweise 25° C, einen Widerstand auf, der einem gewünschten Gesamtwiderstand entspricht.

Im vorliegenden Ausführungsbeispiel weist die Sicherung F bei der vorgegebenen Umgebungstemperatur eine Toleranz hinsichtlich ihres Widerstands von zumindest 5 % auf. Innerhalb eines vorgegebenen Temperaturbereichs, beispielsweise von -40° C bis 80° C, weist die Sicherung F eine Toleranz hinsichtlich ihres Widerstands von zumindest 20 % auf. Ohne Kompensation würde dies zu erheblichen Toleranzen des Widerstands eines die Sicherung F umfassenden Widerstandsnetzwerks führen, insbesondere wenn die Sicherung innerhalb des vorgegebenen Temperaturbereichs einen Temperaturkoeffizienten von 0,4 % pro Grad Kelvin oder höher aufweist.

Der zweite Widerstand R_{P} wird in Abhängigkeit von einer in einem Fehlerzustand in das Widerstandsnetzwerk R1 eingetragenen Leistung bzw. in Abhängigkeit einer vorgegebenen Toleranz des Widerstands des Widerstandsnetzwerks R1 ausgewählt und beträgt ein Vielfaches des ersten Widerstands R_{S}. Vorzugsweise wird der zweite Widerstand R_{P} in Abhängigkeit von einer in das Widerstandsnetzwerk R1 eingetragenen Leistung bei einem Schmelzen der Sicherung F vorgegeben, so dass der erste Widerstand R_{S} entsprechend niederohmig ausgelegt werden kann. Dabei kann der zweite Widerstand R_{P} in Relation zum ersten Widerstand R_{S} beispielsweise zumindest einen zehnfachen Widerstandswert aufweisen. Als besonders vorteilhaft für eine geringe Toleranz des Widerstands des Widerstandsnetzwerks R1 erweist sich eine Auslegung, entsprechend welcher der erste Widerstand R_{S} bzw. der zweite Widerstand R_{P} innerhalb des vorgegebenen Temperaturbereichs eine Toleranz hinsichtlich ihres jeweiligen Widerstands von maximal 0,1 % aufweisen.

Durch Kombination der Sicherung F mit einem Parallel- und einem Serien-Widerstand kann die Toleranz des Widerstands der Sicherung F innerhalb des Widerstandsnetzwerks R1 wirksam und effizient kompensiert werden. Nachfolgend wird dies anhand einiger Zahlenbeispiele verdeutlicht.

Wenn beispielsweise eine Sicherung F mit einem Widerstand zwischen 2,5 Ohm und 5 Ohm bei vorgegebener Umgebungstemperatur verwendet wird (3,75 Ohm ±33,3 % bei 25° C) und die Sicherung F einen Temperaturkoeffizienten von 0,6 % pro Grad Kelvin aufweist, so ergibt sich ein Widerstand der Sicherung F zwischen 1,04 Ohm und 6,8 Ohm über einen gesamten Temperaturbereich von -40° C bis 105° C. Dies entspricht 3,92 Ohm ±73,5 % über den gesamten Temperaturbereich. Wird beispielsweise für eine Signalleitung ein Abschlusswiderstand von 50 Ohm benötigt, kann die Toleranz des Widerstands der Sicherung F mit einem ersten Widerstand R_{S} von 46,25 Ohm (50 Ohm - 3,75 Ohm) und einer Toleranz von ±1 % über den gesamten Temperaturbereich bereits in einem eingeschränkten Umfang kompensiert werden. Über Charge und Temperaturbereich ergibt sich in diesem Fall ein Gesamtwiderstand zwischen 46,83 Ohm (1,04 Ohm + 46,25 Ohm * 99 %) und 53,51 Ohm (6,8 Ohm + 46,25 Ohm * 101 %). Dies entspricht einem Gesamtwiderstand von 50 Ohm ±7,02 % über den gesamten Temperaturbereich.

Eine weitergehende Kompensation der Toleranz des Widerstands der Sicherung F wird erzielt, wenn zusätzlich ein zweiter Widerstand R_{P} parallel zu einer Serienschaltung aus der Sicherung F und dem ersten Widerstand R_{S} verwendet wird. Werden beispielsweise ein erster Widerstand R_{S} von 52 Ohm ±1 % (über den gesamten Temperaturbereich) und ein zweiter Widerstand R_{P} von 510 Ohm ±1 % (über den gesamten Temperaturbereich) verwendet, ergibt sich ein minimaler Gesamtwiderstand von 47,57 Ohm ( 1/(1/510 Ohm * 99 % + 1/(52 Ohm * 99 % + 1,04 Ohm)) ) sowie ein maximaler Gesamtwiderstand von 53,19 Ohm ( 1/(1/510 Ohm * 101 % + 1/(52 Ohm * 101 % + 6,8 Ohm) ). Dies entspricht einem Gesamtwiderstand von 50,26 Ohm ±5,85 % über dem gesamten Temperaturbereich. Im Vergleich zur Serienschaltung aus der Sicherung F und dem ersten Widerstand R_{S} ergibt dies eine Reduzierung der Toleranz des Gesamtwiderstands um 1,18 %. Zudem verbleibt bei einem Schmelzen der Sicherung F durch den zweiten Widerstand R_{P} mit 510 Ohm ein ausreichend hoher Gesamtwiderstand zur Strom- bzw. Leistungsbegrenzung in explosionsgefährdeten Umgebungen.

Bei Verwendung eines ersten Widerstand RS von 47,5 Ohm ±1 % (über den gesamten Temperaturbereich) und eines zweiten Widerstands RP von 2 kOhm ±1 % (über den gesamten Temperaturbereich) erhöht sich die Toleranz des Gesamtwiderstands auf ±6,72 %. Dafür reduziert sich beim Schmelzen der Sicherung F die in das Widerstandsnetzwerk R1 eingetragene Leistung. Dagegen reduziert sich die Toleranz des Gesamtwiderstands bei Verwendung eines ersten Widerstand RS von 71,5 Ohm ±1 % und eines zweiten Widerstands RP von 150 Ohm ±1 % auf ±3,61%. In diesem Fall erhöht jedoch die eingetragene Leistung beim Schmelzen der Sicherung. Im Einzelfall ist abzuwägen, wie viel im Fehlerzustand bzw. beim Schmelzen der Sicherung in das Widerstandsnetzwerk R1 eingetragene Leistung zulässig sein soll. Dementsprechend kann das Widerstandnetzwerk R1 dimensioniert werden.

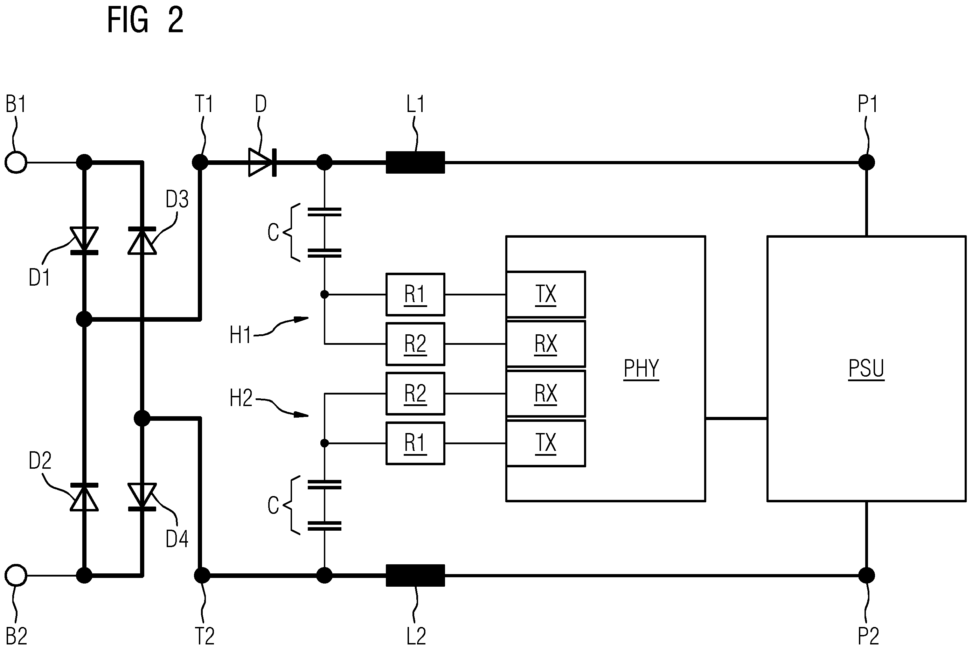

Das in Figur 1 dargestellte Widerstandsnetzwerk R1 wird in einem Leitungstreiber eines Kommunikationsgeräts für ein 2-Draht-Ethernet-Bussystem entsprechend Figur 2 verwendet. Dabei wird durch das Widerstandsnetzwerk R1 jeweils ein durch die Sicherung F geschützter niederohmiger Widerstand gebildet, der von einer ersten Hochpassfilteranordnung H1 bzw. von einer zweiten Hochpassfilteranordnung H2 umfasst ist. Die beiden Hochpassfilteranordnungen H1-H2 sind jeweils mit einer ersten bzw. zweiten Sendeeinheit TX einer PHY-Schnittstellenvorrichtung PHY des Kommunikationsgeräts verbunden. Außerdem umfassen die beiden Hochpassfilteranordnungen H1-H2 jeweils einen hochohmigen Widerstand R2 sowie eine Kondensatoranordnung C mit zumindest zwei in Reihe geschaltete Kondensatoren.

Im vorliegenden Ausführungsbeispiel ist das Kommunikationsgerät entsprechend Ethernet Advanced Physical Layer ausgestaltet und weist einen Brückengleichrichter auf, der vier Gleichrichter-Dioden D1-D4, zwei busseitige Anschlüsse B1-B2 und zwei geräteseitige Anschlüsse T1-T2 umfasst. Insbesondere umfasst das Kommunikationsgerät einen Buseingang zum Anschluss an gemultiplexte Versorgungsleitungen des 2-Draht-Ethernet-Bussystems, die zur gleichzeitigen Energie- und Datenübertragung ausgestaltet sind. Dabei wird der Buseingang durch die busseitigen Anschlüsse B1-B2 des Brückengleichrichters gebildet.

Die PHY-Schnittstellenvorrichtung PHY ist zur Codierung und Decodierung von zwischen dem Kommunikationsgerät und dem 2-Draht-Ethernet-Bussystem ausgetauschten Daten vorgesehen. Die PHY-Schnittstellenvorrichtung PHY ist über die erste Hochpassfilteranordnung H1 mit einer Kathode einer Diode D und über die zweite Hochpassfilteranordnung H2 mit dem zweiten geräteseitigen Anschluss T2 des Brückengleichrichters verbunden. Insbesondere ist die PHY-Schnittstellenvorrichtung PHY für eine differentielle Datensignalübertragung ausgestaltet und umfasst deswegen zwei Sendeeinheiten TX sowie zwei Empfangseinheiten RX.

Die durch jeweils ein Widerstandsnetzwerk entsprechend obigen Ausführungen gebildeten niederohmigen Widerstände R1 der Hochpassfilteranordnungen H1-H2 sind jeweils mit einer Sendeeinheit TX und mit der jeweiligen Kondensatoranordnung C verbunden. Dagegen sind hochohmigen Widerstände R2 jeweils mit einer Empfangseinheit RX und mit der jeweiligen Kondensatoranordnung C verbunden. Die Kondensatoranordnung C der ersten Hochpassfilteranordnung H1 ist mit der Kathode der Diode D verbunden, während die Kondensatoranordnung C der zweiten Hochpassfilteranordnung H2 mit dem zweiten geräteseitigen Anschluss T2 des Brückengleichrichters verbunden ist. Vorzugsweise haben die niederohmigen Widerstände R1 eine Impedanz von 50 Ohm und die hochohmigen Widerstände R2 eine Impedanz von 2-5 kOhm.

Entsprechend Figur 2 ist eine Anode einer ersten Gleichrichter-Diode D1 mit einem ersten busseitigen Anschluss B1 verbunden, während eine Kathode der ersten Gleichrichter-Diode D1 mit einem ersten geräteseitigen Anschluss T1 verbunden ist. Analog dazu ist eine Anode einer zweiten Gleichrichter-Diode D2 mit einem zweiten busseitigen Anschluss B2 verbunden, während eine Kathode der zweiten Gleichrichter-Diode D2 mit dem ersten geräteseitigen Anschluss T1 verbunden ist. Des Weiteren ist eine Kathode einer dritten Gleichrichter-Diode D3 mit dem ersten busseitigen Anschluss B1 verbunden, während eine Anode der dritten Gleichrichter-Diode D3 mit einem zweiten geräteseitigen Anschluss T2 verbunden ist. Außerdem ist eine Kathode einer vierten Gleichrichter-Diode D4 mit dem zweiten busseitigen Anschluss B2 verbunden, während eine Anode der vierten Gleichrichter-Diode D4 mit dem zweiten geräteseitigen Anschluss T2 verbunden ist.

Außerdem umfasst das Kommunikationsgerät ein Netzteil PSU, das über eine erste Spule L1 mit der Kathode der Diode D verbunden ist, deren Anode am ersten geräteseitigen Anschluss T1 des Brückengleichrichters angeschlossen ist. Über eine zweite Spule L2 ist das Netzteil PSU mit dem zweiten geräteseitigen Anschluss T2 des Brückengleichrichters verbunden. Das Netzteil PSU ist als Gleichspannungsnetzteil ausgestaltet und über einen ersten Netzteilanschluss P1 mit der ersten Spule L1 verbunden, während ein zweiter Netzteilanschluss P2 mit der zweiten Spule L2 verbunden ist. Durch die beiden Spulen L1-L2 ist eine Tiefpassfilteranordnung für das Netzteil PSU gebildet. Dabei sind die beiden Spulen L1-L2 jeweils ohne zusätzliche zu ihnen parallel geschaltete Freilaufdiodenanordnungen an das Netzteil PSU angeschlossen.

In Abhängigkeit eines Anschlusses des Kommunikationsgeräts an das 2-Draht-Ethernet-Bussystem ist entweder durch die erste Gleichrichter-Diode D1, die Diode D sowie die vierte Gleichrichter-Diode D4 oder durch die zweite Gleichrichter-Diode D2, die Diode D sowie die dritte Gleichrichter-Diode D3 eine jeweils drei in Reihe angeordnete Dioden umfassende Freilaufdiodenanordnung für die beiden Spulen L1-L2 gebildet. Vorzugsweise ist der Brückengleichrichter zur Verwendung in einem eigensicheren Schaltkreis ausgestaltet und weist gemäß IEC60079-11 eine sichere Anbindung an zu schützende Induktivitäten, nämlich die Spulen L1-12, auf.

Entsprechend einer alternativen, in den Figuren nicht explizit dargestellten Ausführungsvariante ist das Netzteil PSU über die erste Spule L1 direkt mit dem ersten geräteseitigen Anschluss T1 des Brückengleichrichters statt mit der Diode D verbunden. Die Diode D ist in diesem Fall buseingangsseitig statt geräteseitig an den Brückengleichrichter angeschlossen. Dabei ist die Anode der Diode D mit einem ersten Busanschluss des Kommunikationsgeräts verbunden, während die Kathode der Diode ist mit dem ersten busseitigen Anschluss B1 des Brückengleichrichters verbunden ist. Der zweite busseitige Anschluss B2 des Brückengleichrichters bildet bei der alternativen Ausführungsvariante einen zweiten Busanschluss des Kommunikationsgeräts. Die beiden Busanschlüsse des Kommunikationsgeräts sind bei der alternativen Ausführungsvariante nicht vertauschbar.

Im vorliegenden Ausführungsbeispiel ist durch den Brückengleichrichter, die Diode D, die erste Spule L1, die zweite Spule L2, die erste Hochpassfilteranordnung H1 und die zweite Hochpassfilteranordnung H2 ein in das Kommunikationsgerät integrierter Leitungstreiber gebildet. Grundsätzlich kann ein solcher Leitungstreiber auch als externes bzw. separates Gerät ausgestaltet sein und zur Ertüchtigung bestehender Kommunikationsgeräte für hohe Datenübertragungsraten bei gleichzeitig hoher Versorgungsleistung verwendet werden. Auch bei derartigen Anwendungsfällen sind einem Netzteil zugeordnete Spulen immer über insgesamt 3 Dioden in Reihe abgesichert.

## Patentansprüche

1. Leitungstreiber für ein Kommunikationsgerät, das eine PHY-Schnittstellenvorrichtung umfasst, bei dem der Leitungstreiber
- einen Brückengleichrichter, der zwei busseitige Anschlüsse (B1-B2) und zwei geräteseitige Anschlüsse (T1-T2) umfasst,
- eine mit einer ersten Sendeeinheit (TX) der PHY-Schnittstellenvorrichtung (PHY) des Kommunikationsgeräts verbindbare erste Hochpassfilteranordnung (H1),
- eine mit einer zweiten Sendeeinheit (TX) der PHY-Schnittstellenvorrichtung (PHY) des Kommunikationsgeräts verbindbare zweite Hochpassfilteranordnung (H2) umfasst,
- wobei die erste Hochpassfilteranordnung (H1) und die zweite Hochpassfilteranordnung (H2) jeweils eine Vorrichtung zur Kompensation von Widerstandstoleranzen einer toleranzbehafteten Sicherung für einen Stromkreis umfassen,
- wobei die Vorrichtung die toleranzbehaftete Sicherung (F), einen in Reihe zur Sicherung (F) geschalteten ersten Widerstand (R_{S}) und einen parallel zur Sicherung (F) und zum ersten Widerstand (R_{S}) geschalteten zweiten Widerstand (R_{P}) umfasst,
- wobei die Vorrichtung bei einer vorgegebenen Umgebungstemperatur einen Widerstand aufweist, der einem gewünschten Gesamtwiderstand entspricht,
- wobei der zweite Widerstand (R_{P}) in Abhängigkeit von einer in einem Fehlerzustand in die Vorrichtung eingetragenen Leistung und/oder in Abhängigkeit einer vorgegebenen Toleranz des Widerstands der Vorrichtung ausgewählt wird und ein Vielfaches des ersten Widerstands (R_{S}) beträgt.

2. Leitungstreiber nach Anspruch 1,
bei der die Sicherung (F) bei der vorgegebenen Umgebungstemperatur eine Toleranz hinsichtlich ihres Widerstands von zumindest 5 % aufweist.

3. Leitungstreiber nach einem der Ansprüche 1 oder 2,
bei der die Sicherung (F) innerhalb eines vorgegebenen Temperaturbereichs eine Toleranz hinsichtlich ihres Widerstands von zumindest 20 % aufweist.

4. Leitungstreiber nach Anspruch 3,
bei der die Sicherung (F) innerhalb des vorgegebenen Temperaturbereichs einen Temperaturkoeffizienten von zumindest 0,4 % pro Grad Kelvin aufweist.

5. Leitungstreiber nach einem der Ansprüche 3 oder 4,
bei der der erste Widerstand (R_{S}) und/oder der zweite Widerstand (R_{P}) innerhalb des vorgegebenen Temperaturbereichs eine Toleranz hinsichtlich ihres jeweiligen/seines Widerstands von maximal 0,1 % aufweisen/aufweist.

6. Leitungstreiber nach einem der Ansprüche 3 bis 5,
bei der der vorgegebene Temperaturbereich zumindest einen Bereich zwischen -40° C und 80° C umfasst.

7. Leitungstreiber nach einem der Ansprüche 1 bis 6,
bei der die vorgegebene Umgebungstemperatur 25° C beträgt.

8. Leitungstreiber nach einem der Ansprüche 1 bis 7,
bei der der zweite Widerstand (R_{P}) in Abhängigkeit von einer in die Vorrichtung eingetragenen Leistung bei einem Schmelzen der Sicherung (F) vorgegeben ist.

9. Leitungstreiber nach einem der Ansprüche 1 bis 8,
bei der der zweite Widerstand (R_{P}) in Relation zum ersten Widerstand (R_{S}) zumindest einen zehnfachen Widerstandswert aufweist.

10. Leitungstreiber nach einem der Ansprüche 1 bis 9,
bei dem der Leitungstreiber als in ein Kommunikationsgerät integrierter Leitungstreiber ausgestaltet ist.

## Claims

1. Line driver for a communication device, which comprises a PHY interface apparatus, in which the line driver comprises
- a bridge rectifier, which comprises two bus-side terminals (B1-B2) and two device-side terminals (T1-T2),
- a first high-pass filter arrangement (H1), which can be connected to a first transmit unit (TX) of the PHY interface apparatus (PHY) of the communication device,
- a second high-pass filter arrangement (H2), which can be connected to a second transmit unit (TX) of the PHY interface apparatus (PHY) of the communication device,
- wherein the first high-pass filter arrangement (H1) and the second high-pass filter arrangement (H2) each comprise an apparatus for compensation of resistance tolerances of a fuse, which is subject to tolerances, of a circuit,
- wherein the apparatus comprises the fuse (F), which is subject to tolerances, a first resistance (R_{S}) that is connected in series with the fuse (F) and a second resistance (R_{P}) that is connected in parallel with the fuse (F) and the first resistance (R_{S}),
- wherein the apparatus, at a predefined ambient temperature, has a resistance that corresponds to a desired total resistance,
- wherein the second resistance (R_{P}) is selected as a function of a power entered into the apparatus in a fault state and/or as a function of a predefined tolerance of the resistance of the apparatus and amounts to a multiple of the first resistance (R_{S}).

2. Line driver according to claim 1,
in which the fuse (F), at the predefined ambient temperature, has a tolerance of at least 5 % with regard to its resistance.

3. Line driver according to one of claims 1 or 2,
in which the fuse (F), within a predefined temperature range, has a tolerance of at least 20 % with regard to its resistance.

4. Line driver according to claim 3,
in which the fuse (F), within the predefined temperature range, has a temperature coefficient of at least 0.4 % per Kelvin.

5. Line driver according to one of claims 3 or 4,
in which the first resistance (R_{S}) and/or the second resistance (R_{P}), within the predefined temperature range, has/have a tolerance of at most 0.1 % with regard to its respective/their resistance.

6. Line driver according to one of claims 3 to 5,
in which the predefined temperature range comprises a range between -40° C and 80° C.

7. Line driver according to one of claims 1 to 6,
in which the predefined ambient temperature amounts to 25° C.

8. Line driver according to one of claims 1 to 7,
in which the second resistance (R_{P}) is predefined as a function of a power entered into the apparatus when the fuse (F) melts.

9. Line driver according to one of claims 1 to 8,
in which the second resistance (R_{P}) has at least ten times the resistance value in relation to the first resistance (R_{S}).

10. Line driver according to one of claims 1 to 9,
in which the line driver is embodied as a line driver that is integrated into a communication device.

## Revendications

1. Circuit d'attaque de ligne pour un appareil de communication, qui comprend un dispositif d'interface PHY, dans lequel le circuit d'attaque de ligne comprend
- un redresseur à pont, qui comprend deux bornes (B1-B2) du côté du bus et deux bornes (T1-T2) du côté de l'appareil,
- un premier agencement (H1) de filtre passe haut, qui peut être connecté à une première unité (TX) d'émission du dispositif (PHY) d'interface PHY de l'appareil de communication,
- un deuxième agencement (H2) de filtre passe haut, qui peut être connecté à une deuxième unité (TX) d'émission du dispositif (PHY) d'interface PHY de l'appareil de communication,
- dans lequel le premier agencement (H1) de filtre passe haut et le deuxième agencement (H2) de filtre passe haut comprennent chacun un dispositif de compensation de tolérances de résistance d'un fusible, qui a des tolérances, pour un circuit,
- dans lequel le dispositif comprend le fusible (F) qui a des tolérances, une première résistance (R_{S}) montée en série avec le fusible (F) et une deuxième résistance (R_{P}) montée en parallèle avec le fusible (F) et la première résistance (R_{S}),
- dans lequel le dispositif a, à une température ambiante donnée à l'avance, une résistance, qui correspond à une résistance d'ensemble très souhaitée,
- dans lequel la deuxième (R_{P}) est choisie en fonction d'une puissance injectée dans le dispositif dans un état défectueux et/ou en fonction d'une tolérance donnée à l'avance de la résistance du dispositif et se monte à un multiple de la première résistance (R_{S}).

2. Circuit d'attaque de ligne suivant la revendication 1,
dans lequel le fusible (F) a, à la température ambiante donnée à l'avance, une tolérance en ce qui concerne sa résistance d'au moins 5 %.

3. Circuit d'attaque de ligne suivant l'une des revendications 1 ou 2,
dans lequel le fusible (F) a, dans une plage de température donnée à l'avance, une tolérance en ce qui concerne sa résistance d'au moins 20 %.

4. Circuit d'attaque de ligne suivant la revendication 3,
dans lequel le fusible (F) a, dans la plage de tolérance donnée à l'avance, un coefficient de température d'au moins 0,4 % par degré Kelvin.

5. Circuit d'attaque de ligne suivant l'une des revendications 3 ou 4,
dans lequel la première résistance (R_{S}) et/ou la deuxième résistance (R_{P}) ont/a, dans la plage de température donnée à l'avance, une tolérance en ce qui concerne leur/sa résistance respective de 0,1 % au maximum.

6. Circuit d'attaque de ligne suivant l'une des revendications 3 à 5,
dans lequel la plage de température donnée à l'avance comprend au moins une plage comprise entre - 40° C et 80° C.

7. Circuit d'attaque de ligne suivant l'une des revendications 1 à 6,
dans lequel la température ambiante donnée à l'avance s'élève à 25° C.

8. Circuit d'attaque de ligne suivant l'une des revendications 1 à 7,
dans lequel la deuxième résistance (R_{P}) est prescrite en fonction d'une puissance injectée dans le dispositif à une fusion du fusible (F) .

9. Circuit d'attaque de ligne suivant l'une des revendications 1 à 8,
dans lequel la deuxième résistance (R_{P}) a, en relation avec la première résistance (R_{S}), au moins une valeur décuple de la résistance.

10. Circuit d'attaque de ligne suivant l'une des revendications 1 à 9,
dans lequel le circuit d'attaque de ligne est conformé en circuit d'attaque de ligne intégré dans un appareil de communication.
